# EUROPEAN PATENT SPECIFICATION

(11) **EP 2 789 514 B1**
(45) Date of publication and mention of the grant of the patent: **04.08.2021**
(21) Application number: 11876869.6
(22) Date of filing: 09.12.2011
(51) Int. Cl.: B60W 10/08, B60K 6/445, B60W 20/00, B60W 30/18

(54) **HYBRID-VEHICLE CONTROL DEVICE**
STEUERVORRICHTUNG FÜR EIN HYBRIDFAHRZEUG
DISPOSITIF DE COMMANDE DE VÉHICULE HYBRIDE

(43) Date of publication of application: 15.10.2014
(73) Proprietor: TOYOTA JIDOSHA KABUSHIKI KAISHA, Toyota-shi, Aichi-ken, 471-8571 (JP)
(72) Inventor: HASHIMOTO, Toshiya, Toyota-shi Aichi-ken, 471-8571 (JP); YAGUCHI, Hideaki, Toyota-shi Aichi-ken, 471-8571 (JP)
(74) Representative: Winter, Brandl - Partnerschaft mbB
(86) International application number: PCT/JP2011/078588
(87) International publication number: WO 2013/084357

(56) References cited:
- EP-A2- 0 983 894
- EP-A2- 2 110 289
- DE-A1-102011 075 131
- JP-A- 2000 134 712
- JP-A- 2003 267 076
- JP-A- 2004 140 942
- JP-A- 2009 154 723
- None

## Description

### TECHNICAL FIELD

The present invention relates to a hybrid vehicle control device that is applied to a hybrid vehicle including, as a drive source, a hybrid system having an engine and a motor and reduces an output to be transmitted to drive wheels when an accelerator operation and a brake operation are simultaneously performed by a driver.

### BACKGROUND ART

As a control system to be applied to a vehicle, there is a brake override system shown in Patent Document 1. The brake override system described in Patent Document 1 is activated when an accelerator operation and a brake operation are simultaneously performed by a driver and throttles a throttle valve and reduces an engine output to lower a drive force of the vehicle. Accordingly, braking of the vehicle based on the brake operation is made to override acceleration of the vehicle based on the accelerator operation.

### PRIOR ART DOCUMENT

### Patent Document

Patent Document 1: Japanese Laid-Open Patent Publication No. 2010-038051

Document EP 21 110 289 A2 relates to methods und systems for providing launch control from a standstill for hybrid vehicles. During intelligent launch control, non critical electrical systems are reduced or even shut down to provide maximum charging power to the battery and the internal combustion engine is operated at an increased power level to overcharge the battery.

### SUMMARY OF THE INVENTION

### Problems that the Invention is to solve

There is a vehicle driving technique that increases re-acceleration of a vehicle after passing through a curve by reducing the speed of the vehicle without reducing the engine torque by stepping on the brake pedal while also stepping on the accelerator pedal before the curve. In a vehicle using the above-described brake override system, by simultaneously stepping on the accelerator pedal and the brake pedal, the brake override system is activated and reduces the engine torque, so that even if the speed is reduced while stepping on the accelerator pedal, the engine torque is reduced. It takes some time to recover from the reduction in engine torque, so that recovery of the drive force of the vehicle after the brake override system is deactivated takes time. Therefore, in a vehicle using the brake override system, even with the above-described driving technique, sufficient reacceleration demanded by the driver of the vehicle after passing through a curve cannot be ensured, and drivability deteriorates.

An objective of the present invention is to provide a hybrid vehicle control device capable of preventing drivability from deteriorating in a favorable manner.

Means for Solving the Problems

This objective is solved by the subject matter of claim 1. Further aspects are disclosed in the subclaims.

According to a comparative example, which does not fall under the scope of the present invention, the output to be transmitted to the drive wheels is reduced through reduction of the engine torque and torque control of the motor (reduction of the output torque of the motor and an increase in regenerative torque of the motor) when an accelerator operation and a brake operation are simultaneously performed by the driver. With the above-described configuration, the ratio of the amount of reduction of the output by torque control of the motor to the total amount of reduction of the output increases. Accordingly, the amount of reduction of the engine torque decreases. As a result, the amount of increase in engine torque necessary for recovering the output to be transmitted to the drive wheels decreases. Accordingly, the amount of increase in motor torque necessary for the recovery increases. Therefore, when recovering the drive force after the output reduction is canceled, the torque is increased, and the time needed for recovering the drive force is shortened by torque control of the motor with higher responsiveness. Therefore, re-acceleration of the vehicle after the reduction of the output according to simultaneous performance of an accelerator operation and a brake operation is canceled is improved, and drivability is prevented from deteriorating in a favorable manner.

To achieve the foregoing objective, a hybrid vehicle control device according to the present invention is applied to a hybrid vehicle including, as a drive source, a hybrid system having an engine and a motor. When an accelerator operation and a brake operation are simultaneously performed by a driver, an output to be transmitted to drive wheels is reduced by torque control of the motor while engine torque is maintained.

With the above-described configuration, when an accelerator operation and a brake operation are simultaneously performed by a driver, an output to be transmitted to the drive wheels is reduced by motor torque control, that is, a reduction of the output torque of the motor and an increase in regenerative torque of the motor, while the engine torque is maintained. In this case, the drive force after the reduction of the output to be transmitted to the drive wheels is canceled is recovered by increasing the motor torque, the responsiveness of which is higher than that of the engine torque. Therefore, the drive force of the hybrid vehicle can be recovered without waiting for an increase in engine torque the responsiveness of which is low, so that the time taken for recovering the drive force of the vehicle after cancelation of the output reduction is shortened. Therefore, re-acceleration of the vehicle after cancellation of the output reduction is improved, and drivability is prevented from deteriorating in a favorable manner.

According to another comparative example which does not fall under the scope of the present invention, the control device reduces an output to be transmitted to drive wheels when an accelerator operation and a brake operation are simultaneously performed by a driver. At the time of reducing the output, an engine torque is increased and the output is reduced by torque control of the motor by an amount exceeding the amount of increase in the output according to the increase in engine torque.

With the above-described configuration, when an accelerator operation and a brake operation are simultaneously performed by a driver, the output to be transmitted to the drive wheels is reduced by torque control of the motor with high responsiveness. In addition, in preparation for subsequent re-acceleration of the vehicle, the engine output is increased in advance. Therefore, after cancellation of the output reduction, the output to be transmitted to the drive wheels is quickly increased. Therefore, re-acceleration of the vehicle after the output reduction is canceled is improved, and the drivability is prevented from deteriorating in a favorable manner.

According to another comparative example, if the engine is in a stopped state when increasing the output to be transmitted to the drive wheels again by canceling the brake operation, a necessary output cannot be achieved only by the motor output, and it may become necessary to start the engine. In this case, according to the time to be taken for starting the engine, the increase in output to be transmitted to the drive wheels is delayed, so that re-acceleration of the hybrid vehicle, after the brake operation is cancelled, deteriorates. Even in this case, when an accelerator operation and a brake operation are simultaneously performed by a driver while the engine is in a stopped state, the engine is started and torque control of the motor is executed such that the output is reduced by an amount exceeding the amount of increase in output caused by the starting of the engine. Accordingly, the output to be transmitted to the drive wheels at the time of re-acceleration can be increased without delay caused by waiting for engine start.

According to another comparative example, when the amount of reduction of the output by torque control of the motor is increased, the loads on the motor and battery increase, so that the motor and battery are required to have high load resistance. Therefore, it is preferable that, after a prescribed time elapses from the start of simultaneous performance of an accelerator operation and a brake operation, the loads on the motor and battery are reduced by reducing the amount of the output reduction to be transmitted to the drive wheels by torque control of the motor and increasing the amount of the output reduction by reducing the engine torque. If the loads on the motor and battery are high, these loads can also be suppressed by reducing the amount of the output reduction by torque control of the motor.

In a hybrid vehicle capable of switching among a plurality of traveling modes, which are different in traveling characteristics from each other, it is considered that the driver's demand for re-acceleration performance after cancellation of the output reduction is great when a traveling mode is selected that improves the acceleration performance of the vehicle to a level that is higher than usual and that the driver's demand is small when a different traveling mode is selected. Therefore, if the traveling mode that increases the acceleration performance of the hybrid vehicle to a level that is higher than usual is not selected, the drivability can be more efficiently prevented from deteriorating by reducing the amount of the output reduction to be transmitted to the drive wheels by torque control of the motor as compared with the case where the mode is selected.

### BRIEF DESCRIPTION OF THE DRAWINGS

Fig. 1 is a diagram schematically showing a configuration of a hybrid system of a hybrid vehicle to which a first embodiment of the present invention is applied;
Fig. 2 is a graph showing a relationship between an accelerator operation amount and a requested output in each traveling mode of the hybrid vehicle to which the same embodiment is applied;
Fig. 3 is a flowchart showing procedures of a brake override control routine to be applied to the same embodiment;
Fig. 4 is a time chart showing a control mode of a comparative example not falling under the scope of the present invention in a case where reduction of an HVS output at activation of the brake override system is performed by reduction of the engine torque and torque control of the motor;
Fig. 5 is a time chart showing an example of a control at activation of the brake override system of an embodiment of the present invention;
Fig. 6 is a flowchart showing processing procedures of a brake override control routine to be applied to another comparative example not falling under the scope of the present invention,
Fig. 7 is a time chart showing an example of control at activation of the brake override system in the same comparative example not falling under the scope of the present invention,
Fig. 8 is a flowchart showing processing procedures of a brake override control routine to be applied to another comparative example not falling under the scope of the present invention,
Fig. 9 is a time chart showing an example of control at activation of the brake override system in the same comparative example not falling under the scope of the present invention,
Fig. 10 is a flowchart showing processing procedures of a brake override control routine to be applied to another comparative example;
Fig. 11 is a time chart showing an example of control at activation of the brake override system in the same comparative example; and
Fig. 12 is a flowchart showing processing procedures of a brake override control routine to be applied to another comparative example of the present invention.

### MODES FOR CARRYING OUT THE INVENTION

### First Embodiment

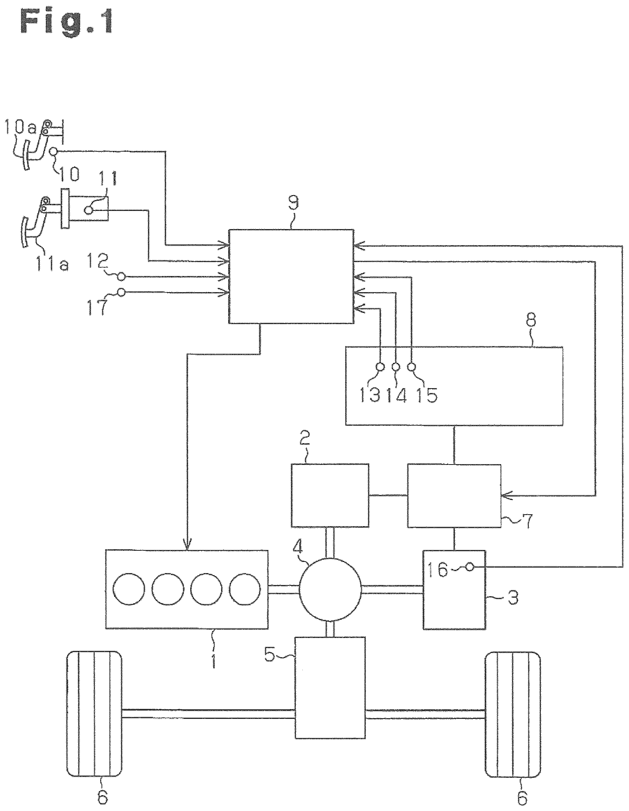

A hybrid vehicle control device according to an first embodiment which is the claimed embodiment of the present invention will now be described with reference to Figs. 1-3 and 5.

First, a configuration of a hybrid system for a hybrid vehicle to which the control device of the present embodiment is applied will be described with reference to Fig. 1.

This hybrid system includes an engine 1, as a heat engine, and two motor generators. Hereinafter, a motor generator to be used mainly to generate electricity of the two motor generators is referred to as a generator 2, and a motor generator to be used mainly to generate a drive force is referred to as a motor 3.

The engine 1, the generator 2, and the motor 3 are connected to a power split mechanism 4 formed by a planetary gear. The power split mechanism 4 is connected to drive wheels 6 via a speed reduction mechanism 5. By this power split mechanism 4, power of the engine 1 is split into power to drive the generator 2 and power to drive the drive wheels 6.

The rotational speeds of the engine 1, generator 2, and drive wheels 6 joined via the power split mechanism 4 always have a relationship shown by a straight line on an alignment chart illustrating a rotation state of the planetary gear of the power split mechanism 4. Therefore, in this hybrid system, by changing the rotational speed of the generator 2, the change gear ratio between the engine 1 and the drive wheels 6, that is, the ratio of the rotational speed of the drive wheels 6 to the rotational speed of the engine 1 is changed.

Further, the hybrid system includes a power control unit 7 having a boost converter and an inverter. The boost converter boosts the voltage of the hybrid battery 8 to a voltage necessary for driving the generator 2 and the motor 3. The inverter converts a high voltage DC current boosted by the boost converter into an alternating current to be supplied to the generator 2 and the motor 3 and converts alternating currents generated by the generator 2 and the motor 3 into direct currents when they function as power generators.

This hybrid system is controlled by an electronic control unit 9. The electronic control unit 9 includes a central processing unit (CPU), which performs arithmetic processing relating to various controls of the hybrid system, a read-only memory (ROM), in which control programs and data are stored, and a random access memory (RAM), which temporarily stores operation results of the CPU and detection results of sensors.

The electronic control unit 9 receives detection signals of sensors provided at various portions of the hybrid vehicle. The sensors include an accelerator position sensor 10, a master cylinder pressure sensor 11, a vehicle speed sensor 12, a battery temperature sensor 13, a battery voltage sensor 14, a battery current sensor 15, and a motor temperature sensor 16. The accelerator position sensor 10 detects the amount of stepping on an accelerator pedal 10a (accelerator operation amount), and the master cylinder pressure sensor 11 detects a master cylinder pressure generated according to stepping on the brake pedal 11a. The vehicle speed sensor 12 detects the vehicle speed of the hybrid vehicle. Further, the battery temperature sensor 13, the battery voltage sensor 14, and the battery current sensor 15 detect the temperature, voltage, and current value of the hybrid battery 8, respectively. The motor temperature sensor 16 detects the temperature of the motor 3.

The electronic control unit 9 is connected to a traveling mode changeover switch 17 for selecting a traveling mode of the hybrid vehicle, In this hybrid vehicle, according to an operation on the traveling mode changeover switch 17, one of three traveling modes of an economy traveling mode, which prioritizes fuel efficiency, a sport traveling mode, which prioritizes acceleration, and a normal traveling mode in between is selected.

The electronic control unit 9 calculates outputs of the engine 1 and the motor 3 corresponding to the driving state of the hybrid vehicle based on detection results of these sensors and transmits output requests to these components to control the drive force of the hybrid vehicle. Next, such drive force control of the hybrid vehicle will be described.

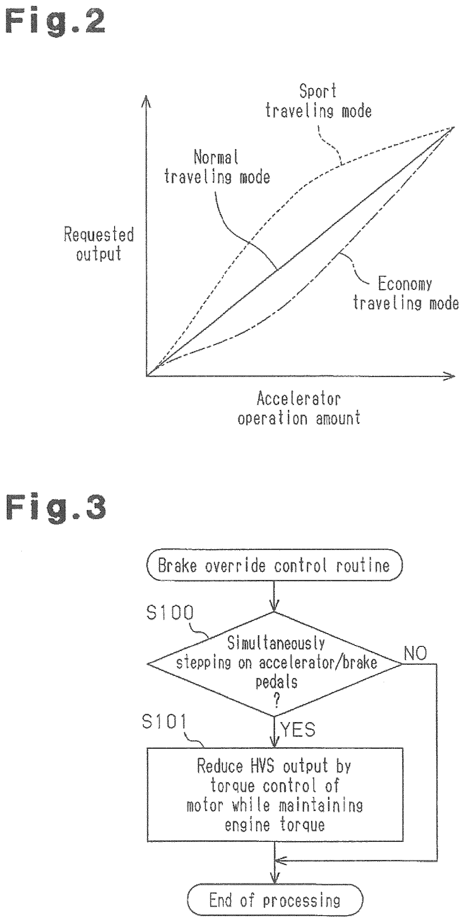

For drive force control, first, the electronic control unit 9 calculates the magnitude of an output of the hybrid system demanded by the driver as a requested output based on the accelerator operation amount detected by the accelerator position sensor 10 and the vehicle speed detected by the vehicle speed sensor 12. The relationships between the accelerator operation amounts and requested outputs in the traveling modes of the hybrid vehicle at the same vehicle speed are as shown in Fig. 2. As shown in this drawing, in the sport traveling mode, the requested output is larger than in the normal traveling mode and the economy traveling mode at the same accelerator operation amount.

The electronic control unit 9 calculates the state of charge (SOC) value of the hybrid battery 8 based on detection signals of the battery temperature sensor 13, the battery voltage sensor 14, and the battery current sensor 15. Then, the electronic control unit 9 calculates a requested total output, which is a requested value of an output to be transmitted from the hybrid system, which is a drive source for the drive wheels 6 (hereinafter, referred to as HVS output), based on the requested output and the SOC value. The HVS output is the sum of the output of the engine 1, the output of the generator 2, and the output of the motor 3. When the generator 2 or the motor 3 generates power, these outputs are calculated as negative values by setting the power used for power generation as an absolute value.

Subsequently, the electronic control unit 9 calculates a target engine speed and a requested engine output based on the requested total output and sends a corresponding command to the engine 1. In the engine 1, according to this command, engine control including fuel injection control and ignition time control is performed to obtain an engine output corresponding to the requested engine output and an engine speed corresponding to the target engine speed.

The electronic control unit 9 calculates a driver's requested torque corresponding to the traveling state of the hybrid vehicle. This requested torque is an output torque of the hybrid system necessary for obtaining an HVS output corresponding to the requested total output at the current vehicle speed.

Then, the electronic control unit 9 calculates torque command values of the generator 2 and the motor 3 based on the driver's requested torque and the engine torque determined by the requested engine output and the target engine speed. Then, the electronic control unit 9 sends a command corresponding to the calculated torque command values of the generator 2 and the motor 3 to the power control unit 7. The torque command values are set to be positive when the generator 2 and the motor 3 are made to perform powering operation and set to be negative when the generator and the motor are made to perform regenerative operation. According to this command, the power control unit 7 controls the drive alternating currents or power generating alternating currents of the generator 2 and the motor 3 such that torques corresponding to the torque command values are output.

The hybrid vehicle to which the control device according to the present embodiment is applied employs a brake override system that makes braking of the vehicle based on a brake operation (stepping on the brake pedal 11a) override acceleration of the vehicle based on an accelerator operation (stepping on the accelerator pedal 10a). Next, this brake override system will be described.

In the present embodiment, a brake override system is realized through the processing of the brake override control routine shown in Fig. 3. The processing of this routine is repeatedly performed by the electronic control unit 9 in each prescribed control cycle during traveling of the hybrid vehicle.

When the processing of this routine is started, first, in Step S100, it is determined whether an accelerator operation and a brake operation are simultaneously performed, that is, it is determined whether the accelerator pedal 10a and the brake pedal 11a are simultaneously stepped on. If the accelerator pedal 10a and the brake pedal 11a are not simultaneously stepped on (S100: NO), this processing of this routine is ended.

If the accelerator pedal 10a and the brake pedal 11a are simultaneously stepped on (S100: YES), the HVS output is reduced by torque control of the motor 3 in Step S101, while the engine torque is maintained. Thereafter, this processing of the routine is ended.

Specifically, the processing of the electronic control unit 9 in Step S101 is performed according to the following procedures. That is, at this time, the electronic control unit 9 resets the requested total output to be smaller than the value calculated from the requested output and the SOC value. However, the electronic control unit 9 calculates a requested engine output and a target engine speed based on the requested total output before being reset. The electronic control unit 9 calculates torque command values of the generator 2 and the motor 3 based on an engine torque determined by the requested engine output and the target engine speed calculated herein and a requested torque corresponding to the reset requested total output.

When the torque command value of the motor 3 calculated herein is negative, the motor 3 is made to perform regenerative operation, and a part of the power that is transmitted from the engine 1 to the drive wheels 6 in normal conditions is used for regenerative power generation. Accordingly, the HVS output is reduced by a necessary amount.

According to the invention, reduction of the HVS output according to activation of the brake override system is performed only by reduction of the motor torque. Therefore, when the HVS output is reduced according to simultaneous performance of an accelerator operation and a brake operation, the ratio of the amount of reduction of the HVS output by torque control of the motor 3 to the total amount of reduction of the HVS output becomes larger than in the case where similar reduction of the HVS output is performed by reduction in the accelerator operation amount.

Next, a control operation at activation of the brake override system in the hybrid vehicle control device according to the present invention will be described.

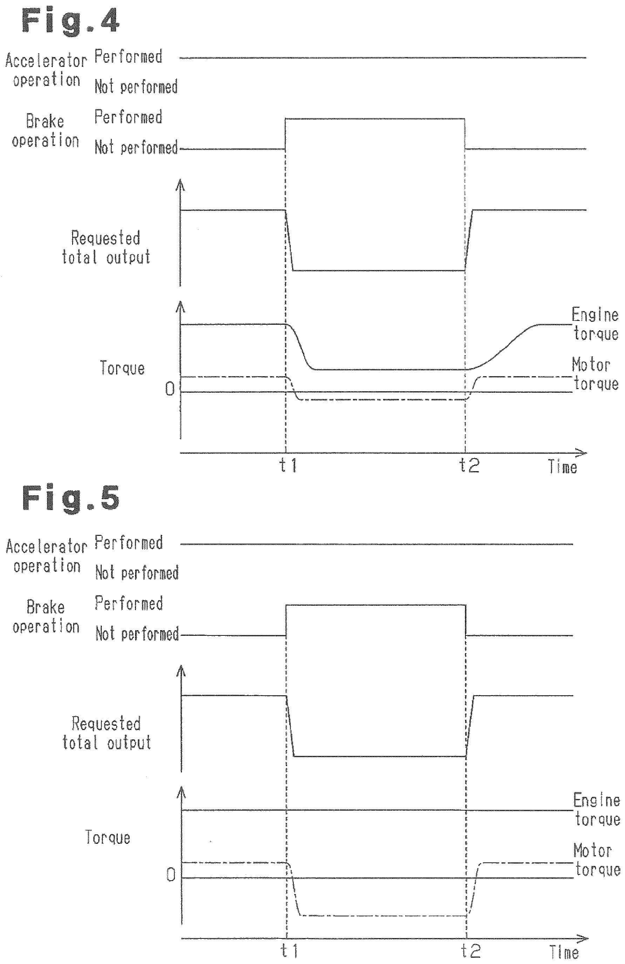

First, the case according to a comparative example not falling under the scope of the present invention where reduction of the HVS output according to activation of the brake override system is performed by both reducing the engine torque and controlling the torque of the motor 3 will now be described. As shown in Fig. 4, which shows aspects in relation to the background of the invention, in this case, when an accelerator operation and a brake operation are simultaneously performed at a point in time t1, both engine torque and motor torque are reduced by a corresponding reduction in requested total output. The reduced engine torque and motor torque are recovered according to release of the brake operation at a point in time t2.

The responsiveness of the motor torque is comparatively high, so that the motor torque is recovered in a comparatively short time in this case. However, an increase in engine torque is accompanied by a delay such as a response delay of intake, so that recovery of the engine torque in this case takes time. Therefore, in this case, recovery of the drive force of the hybrid vehicle after the brake override system is deactivated is delayed.

In contrast, according to the invention, as shown in Fig. 5, in response to the reduction of the requested total output at the point in time t1, at which an accelerator operation and a brake operation are simultaneously performed, the motor torque is reduced. However, the engine torque is maintained as it is. Therefore, in this case, recovery of the drive force of the hybrid vehicle after the point in time t2, at which the brake override system is deactivated, is performed by increasing the motor torque with high responsiveness. Therefore, in this case, recovery of the drive force of the hybrid vehicle after the brake override system is deactivated is performed in a comparatively short time.

The present invention as described above has the following advantages.

According to the invention, when activating the brake override system according to simultaneous performance of an accelerator operation and a brake operation, the HVS output is reduced by torque control of the motor 3 while the engine torque is maintained. Specifically, reduction of the HVS output according to activation of the brake override system is performed only by torque control of the motor 3. Therefore, recovery of the drive force of the hybrid vehicle after the brake override system is deactivated is performed by increasing the motor torque higher in responsiveness than the engine torque, and therefore, the time to be taken for the recovery is shortened. Therefore, re-acceleration performance of the vehicle after the brake override system is deactivated is improved, and the drivability is prevented from deteriorating in a favorable manner.

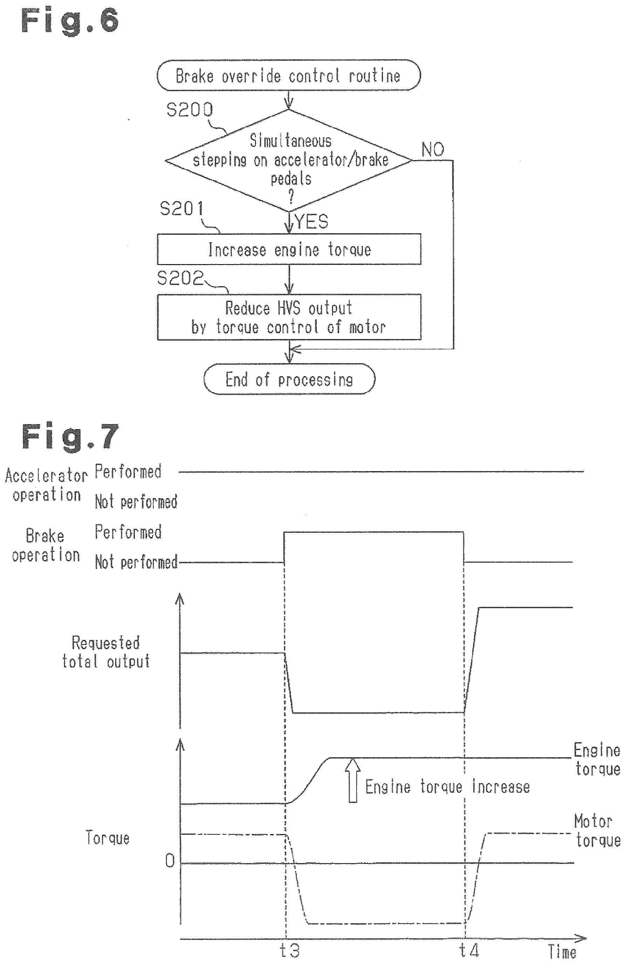

Another comparative example not falling under the scope of the present invention will now be described with reference to Figs. 6 and 7.

According to the invention, when the brake override system is activated, the engine torque is maintained to prevent re-acceleration performance of the hybrid vehicle from deteriorating after the brake override system is deactivated. In the comparative example, when the brake override system is activated, the engine torque is increased in advance in preparation for re-acceleration performance of the hybrid vehicle after the brake override system is deactivated, thereby achieving higher re-acceleration performance.

In the comparative example, the brake override system is realized through the processing of the brake override control routine shown in Fig. 6. The processing of this routine is repeatedly performed in each prescribed control cycle by the electronic control unit 9 during traveling of the hybrid vehicle.

When the processing of this routine is started, first, in Step S200, it is determined whether an accelerator operation and a brake operation are simultaneously performed. If the accelerator pedal 10a and the brake pedal 11a are not simultaneously stepped on (S200: NO), this processing of the routine is ended.

If the accelerator pedal 10a and the brake pedal 11a are simultaneously stepped on (S200: YES), the engine torque is increased in Step S201. In the subsequent Step S202, this processing of the routine is then ended after the HVS output is reduced by torque control of the motor 3.

Specifically, the processing of the electronic control unit 9 in Step S201 and Step S202 is performed according to the following procedures. Specifically, at this time, the electronic control unit 9 resets the requested total output to be smaller than the value calculated from the requested output and the SOC value. Further, the electronic control unit 9 calculates a requested engine output and a target engine speed such that the engine torque is increased. Further, the electronic control unit 9 calculates torque command values of the generator 2 and the motor 3 based on an engine torque determined by the requested engine output and the target engine speed calculated herein and a requested torque corresponding to the reset requested total output. This torque command value of the motor 3 is set such that reducing the torque of the motor 3 will reduce the HVS output, which is the sum of the amount of the requested total output reduction according to brake override control and the amount of increase in HVS output according to the increase in engine torque.

Next, a control operation at activation of the brake override system in the hybrid vehicle control device according to the comparative example will be described with reference to Fig. 7.

When an accelerator operation and a brake operation are simultaneously performed at a point in time t3 in Fig. 7, the requested total output is reduced to lower the HVS output. At this time, in the present embodiment, the engine torque is increased. Then, in response to reducing the motor torque, the HVS output is reduced according to the reduction of the requested total output.

When stepping on the brake pedal 11 a is cancelled and the accelerator pedal 10a is additionally stepped on, the requested total output is increased at point in time t4, and an increase in HVS output for re-acceleration of the hybrid vehicle is started. At this time, in the present embodiment, the engine torque has been increased in advance. Thus, the amount of increase in engine torque necessary for the increase in HVS output is limited. Therefore, the increase in HVS output for re-acceleration is performed mainly by increasing the motor torque with higher responsiveness.

The present comparative example not falling under the scope of the present invention has the following advantages.

In this comparative example, when an accelerator operation and a brake operation are simultaneously performed by the driver, the engine torque is increased, and torque control of the motor 3 is executed such that the HVS output is reduced by an amount exceeding the amount of increase in HVS output caused by the increase in engine torque. Therefore, the amount of increase in engine torque necessary for an increase in HVS output for re-acceleration becomes smaller. This increases the amount of increase in motor torque necessary for the increase in HVS output. As a result, at the time of acceleration, the HVS output is increased to be higher by increasing the motor torque with high responsiveness. Therefore, re-acceleration performance of the vehicle after a reduction of the HVS output is canceled is improved, and the drivability is prevented from deteriorating in a favorable manner.

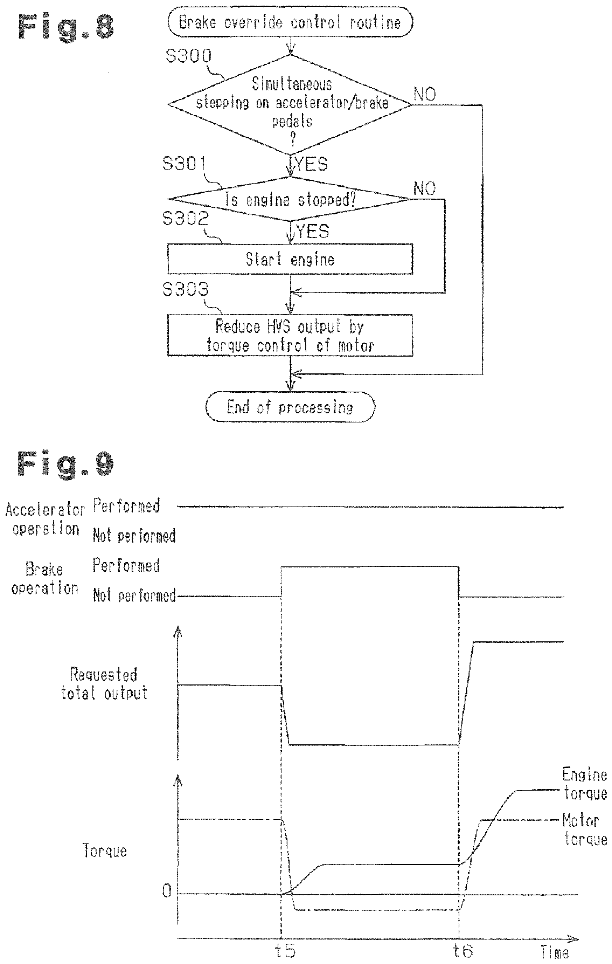

Another comparative example not falling under the scope of the present invention will now be described with reference to Figs. 8 and 9.

In a case where the brake override system is activated during motor-driven traveling of the hybrid vehicle with the engine 1 stopped, if the accelerator pedal 10a is additionally stepped on after stepping on the brake pedal 11a is cancelled, it may become impossible to ensure the HVS output requested by the driver only by the output of the motor 3. In such a case, it becomes necessary to start the engine 1, and an increase in HVS output is delayed by the time required for starting the engine 1. This deteriorates the re-acceleration performance of the hybrid vehicle. Therefore, in this comparative example, by starting the engine 1 in advance before the brake override system is activated, the re-acceleration performance of the hybrid vehicle after the brake override system is deactivated is improved.

In the comparative example, the brake override system is realized through the processing of the brake override control routine shown in Fig. 8. The processing of this routine is repeatedly performed in each prescribed control cycle by the electronic control unit 9 during traveling of the hybrid vehicle.

When the processing of this routine is started, first, in Step S300, it is determined whether an accelerator operation and a brake operation are simultaneously performed, that is, whether the accelerator pedal 10a and the brake pedal 11a are simultaneously stepped on. If the accelerator pedal 10a and the brake pedal 11a are not simultaneously stepped on (S300: NO), the processing of this routine is ended.

If the accelerator pedal 10a and the brake pedal 11a are simultaneously stepped on (S300: YES), it is determined, in Step S301, whether the engine 1 is in a stopped state. If the engine 1 is not in a stopped state (Step S301: NO), the processing is directly advanced to Step S303. If the engine 1 is in a stopped state (S301: YES), the processing is advanced to Step S303 after the engine 1 is started in Step S302.

When the processing is advanced to Step S303, the HVS output is reduced by torque control of the motor 3. Thereafter, this processing of the routine is ended.

Specifically, the processing of the electronic control unit 9 in Step S303 is performed according to the following procedures. That is, the electronic control unit 9 at this time resets the requested total output to be smaller than the value calculated from the requested output and the SOC value. The electronic control unit 9 calculates torque command values of the generator 2 and the motor 3 in accordance with the reset requested total output. However, when the engine 1 is started in Step S302, the HVS output increases according to an engine output generated by this start, Therefore, the torque command value of the motor 3 at this time is set such that reducing the torque of the motor 3 reduces the HVS output, which is the sum of the amount of reduction in the requested total output according to brake override control and the amount of increase in HVS output according to the starting of the engine 1.

A control operation at activation of the brake override system in the hybrid vehicle control device according to the comparative example described above will be described with reference to Fig. 9.

During motor-driven traveling, when an accelerator operation and a brake operation are simultaneously performed at the point in time t5, the requested total output is reduced to lower the HVS output. At this time, the engine 1 is started, and the motor torque is reduced such that the HVS output is reduced by an amount exceeding the amount of increase in HVS output caused by the start of the motor.

When stepping on the brake pedal 11a is cancelled and the accelerator pedal 10a is additionally stepped on at point in time t6, the requested total output, which has been reduced at the point in time t5, is increased, and an increase in HVS output for re-acceleration of the hybrid vehicle is started. The requested total output at this time is increased to a value over the critical power of the motor 3 allowed according to the SOC value of the present hybrid battery 8, and the HVS output corresponding to the requested total output cannot be ensured only by the motor 3.

However, in this comparative example, the engine 1 is started in advance at the point in time t5, at which the brake override system is activated. Therefore, the HVS output is increased without delay due to waiting for the starting of the engine 1, and the drive force is quickly increased for reacceleration.

The present comparative example not falling under the scope of the present invention has the following advantages in addition to the advantage (1).

In this comparative example, when an accelerator operation and a brake operation are simultaneously performed by the driver while the engine 1 is in a stopped state, the engine 1 is started, torque control of the motor 3 is executed such that the HVS output is reduced by an amount exceeding the amount of increase in HVS output caused by the start. Therefore, even in the case where the brake override system is activated while the engine 1 is in a stopped state, the HVS output can be increased to a value requested by the driver after the brake override system is deactivated, without waiting for completion of the starting of the engine 1. Therefore, the reacceleration performance of the vehicle is further improved.

In the case where the brake override system is activated while the engine 1 is in a stopped state, the HVS output can also be recovered by increasing both the engine torque and the motor torque after the system is deactivated. Therefore, in the case where the brake override system is activated while the engine 1 is in a stopped state, recovery of the HVS output after the system is deactivated can be shortened.

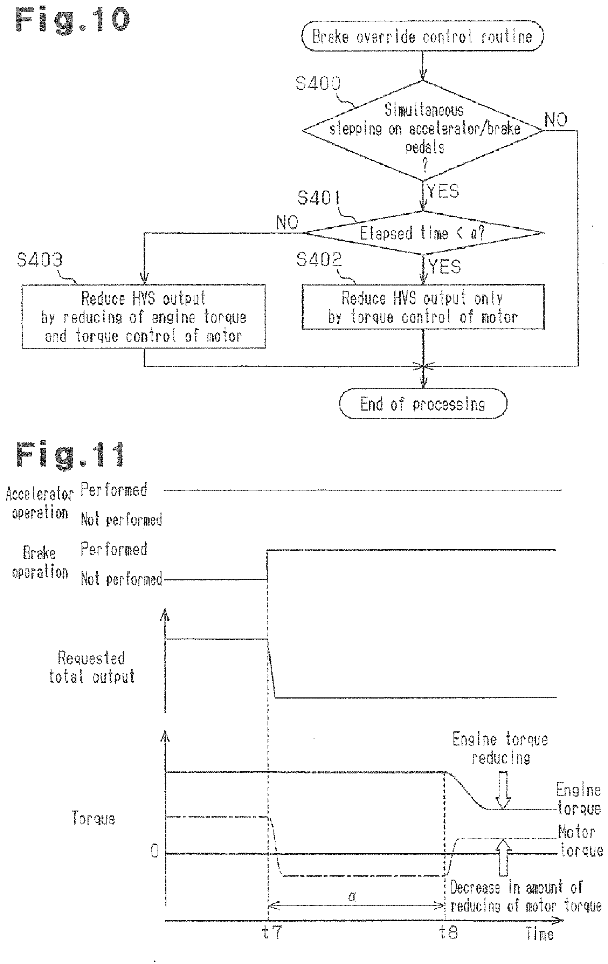

A hybrid vehicle according to another comparative example of the present invention will now be described with reference to Figs. 10 and 11 which show aspects in relation to the background of the invention.

In the examples described above, the amount of reduction of the HVS output by torque control of the motor 3 is increased when the HVS output is reduced according to activation of the brake override system. This suppresses a reduction of the engine torque and prevents the reacceleration performance of the hybrid vehicle after deactivation of the system from deteriorating. However, such torque control of the motor 3 increases the loads on the motor 3 and the hybrid battery 8, so that these components require high load resistance. Therefore, in the present embodiment, after a prescribed time elapses from activation of the brake override system, the amount of the HVS output reduction by torque control of the motor 3 is reduced, and accordingly, the amount of the reduction of the same HVS output by reducing the engine torque is increased to reduce the loads on the motor 3 and the hybrid battery 8.

In the present embodiment, the brake override system is realized through the processing of the brake override control routine shown in Fig. 10. The processing of this routine is repeatedly performed in each prescribed control cycle by the electronic control unit 9 during traveling of the hybrid vehicle.

When the processing of this routine is started, first, in Step S400, it is determined whether an accelerator operation and a brake operation are simultaneously performed, that is, whether the accelerator pedal 10a and the brake pedal 11a are simultaneously stepped on. If the accelerator pedal 10a and the brake pedal 11a are not simultaneously stepped on (S400: NO), this processing of the routine is ended.

If the accelerator pedal 10a and the brake pedal 11a are simultaneously stepped on (S400: YES), it is determined, in Step S401, whether an elapsed time after the accelerator pedal 10a and the brake pedal 11a are simultaneously stepped on is less than a threshold a. If the elapsed time is less than the threshold α (S401: YES), the processing is advanced to Step S402, and in this Step S402, the HVS output is reduced only by torque control of the motor 3, and then this processing of the routine is ended. When the elapsed time is equal to or more than the threshold α (S401: NO), the processing is advanced to Step S403. In this Step S403, the HVS output is reduced by reducing the engine torque and torque control of the motor 3, and then this processing of the routine is ended.

Specifically, the processing of the electronic control unit 9 in Step S402 is performed according to the following procedures. Specifically, at this time, the electronic control unit 9 resets the requested total output to be smaller than the value calculated from the requested output and the SOC value. However, at this time, the electronic control unit 9 calculates a requested engine output and a target engine speed from the requested total output before being reset. Then, the electronic control unit 9 calculates torque command values of the generator 2 and the motor 3 based on the engine torque determined by the requested engine output and the target engine speed calculated herein and a requested torque corresponding to the reset requested total output.

The processing of the electronic control unit 9 in Step S403 is performed according to the following procedures. Specifically, at this time, the electronic control unit 9 resets the requested total output to be smaller than the value calculated from the requested output and the SOC value. Then, the electronic control unit 9 calculates a requested engine output and a target engine speed based on the reset requested total output. Further, the electronic control unit 9 calculates torque command values of the generator 2 and the motor 3 based on an engine torque determined by the requested engine output and the target engine speed calculated herein and the requested torque corresponding to the reset requested total output.

Next, a control operation at activation of the brake override system in the hybrid vehicle control device according to the present embodiment will be described with reference to Fig. 11.

When an accelerator operation and a brake operation are simultaneously performed at point in time t7, the requested total output is reduced. In the present embodiment, the reduction of the HVS output in accordance with this reduction of the requested total output is performed only by torque control of the motor 3. Therefore, at this time, only the motor torque is lowered, and the engine torque is maintained as it is.

After the point in time t8, at which the time equal to the threshold α has elapsed after the point in time t7, a reduction of the HVS output in accordance with a reduction of the requested total output is performed by both reducing the engine torque and controlling the torque of the motor 3. Therefore, at the point in time t8, the engine torque is reduced, and accordingly, the amount of reduction of the motor torque is reduced. As a result, the amount of reduction of the HVS output by torque control of the motor 3 is reduced, and the loads on the motor 3 and the hybrid battery 8 are reduced.

The present embodiment has the following advantages in addition to the advantage (1).

(5) In the present embodiment, after the prescribed time elapses from activation of the brake override system, the amount of reduction of the HVS output by torque control of the motor 3 is reduced, and accordingly, the amount of reduction of the HVS output by reducing the engine torque is increased. More specifically, a reduction of the HVS output according to activation of the brake override system is performed only by torque control of the motor 3 until the prescribed time elapses after the start of activation of the brake override system and is performed by both reducing the engine torque and controlling the torque of the motor 3 after the prescribed time elapses. Therefore, the loads on the motor 3 and the hybrid battery 8 can be prevented from being increased by extension of activation of the brake override system.

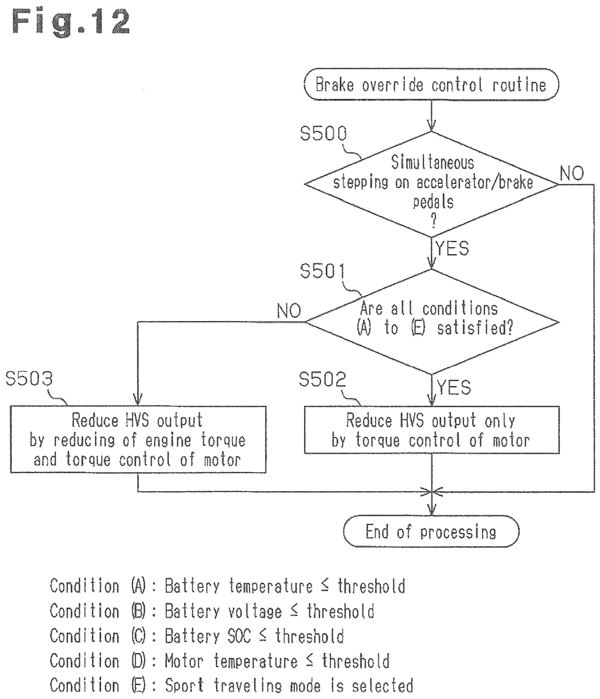

Another comparative example of the present invention will be described with reference to Fig. 12 which shows aspects in relation to the background of the invention.

As described above, by increasing the amount of reduction of the HVS output by torque control of the motor 3 at activation of the brake override system, reduction of the engine torque is suppressed. After the system is deactivated, the re-acceleration performance of the hybrid vehicle is prevented from deteriorating. However, if the amount of reduction of the HVS output by torque control of the motor 3 is increased while the loads on the motor 3 and the hybrid battery 8 are high, these loads become higher. Therefore, when increasing the amount of reduction of the HVS output by torque control of the motor 3, the motor 3 and the hybrid battery 8 require high load resistance. Therefore, in the present embodiment, only when the loads on the motor 3 and the hybrid battery 8 are not high, the HVS output is reduced only by torque control of the motor 3 according to activation of the brake override system. Accordingly, when the loads on the motor 3 and the hybrid battery 8 are high, the amount of reduction of the HVS output by torque control of the motor 3 is reduced to reduce the loads.

In contrast, in a hybrid vehicle capable of switching the traveling mode as described above, it is assumed that the driver's demand for re-acceleration performance after deactivation of the brake override system is great when the sport traveling mode, which increases acceleration performance to be higher than normal, is selected and is small when other traveling modes are selected. Therefore, in the present embodiment, only when the sport traveling mode is selected, the amount of reduction of the HVS output by torque control of the motor 3 according to activation of the brake override system is increased.

In the present embodiment, the brake override system is realized through the processing of the brake override control routine shown in Fig. 12. The processing of this routine is repeatedly performed in each prescribed control cycle by the electronic control unit 9 during traveling of the hybrid vehicle.

When the processing of this routine is started, first, in Step S500, it is determined whether an accelerator operation and a brake operation are simultaneously performed, that is, whether the accelerator pedal 10a and the brake pedal 11a are simultaneously stepped on. If the accelerator pedal 10a and the brake pedal 11a are not simultaneously stepped on (S500: NO), this processing of the routine is ended.

If the accelerator pedal 10a and the brake pedal 11a are simultaneously stepped on (S500: YES), it is determined, in Step S501, whether all of the following conditions (A) to (E) are satisfied. The following conditions (A) to (D) are for determining whether or not there are allowances for loads on the motor 3 and the hybrid battery 8. When one or more of these conditions are not satisfied, at least one of the loads on the motor 3 and the hybrid battery 8 is high.
(A) The temperature of the hybrid battery 8 is equal to or less than a threshold.
(B) The voltage of the hybrid battery 8 is equal to or less than a threshold.
(C) The SOC value of the hybrid battery 8 is equal to or less than a threshold.
(D) The temperature of the motor 3 is equal to or less than a threshold.
(E) The sport traveling mode is selected.

If all of the conditions (A) to (E) are satisfied (S501: YES), the HVS output is reduced only by torque control of the motor 3 in Step S502, and then this processing of the routine is ended. If any one of the conditions (A) to (E) is not satisfied (S501: NO), the HVS output is reduced by reducing the engine torque and by controlling the torque of the motor 3 in Step S503, and then this processing of the routine is ended.

Specifically, the processing of the electronic control unit 9 in Step S502 is performed according to the following procedures. That is, at this time, the electronic control unit 9 resets the requested total output to be smaller than the value calculated from the requested output and the SOC value. However, the electronic control unit 9 calculates a requested engine output and a target engine speed based on the requested total output before being reset. Then, the electronic control unit 9 calculates torque command values of the generator 2 and the motor 3 based on an engine torque determined by the requested engine output and the target engine speed calculated herein and a requested torque corresponding to the reset requested total output.

Specifically, the processing of the electronic control unit 9 in Step S503 is performed according to the following procedures. That is, at this time, the electronic control unit 9 resets the requested total output to be smaller than the value calculated from the requested output and the SOC value. Then, the electronic control unit 9 calculates a requested engine output and a target engine speed based on the reset requested total output. Further, the electronic control unit 9 calculates torque command values of the generator 2 and the motor 3 based on an engine torque determined by the requested engine output and the target engine speed calculated herein and a requested torque corresponding to the reset requested total output.

The present embodiment has the following advantages in addition to the advantage (1).

If loads on the motor 3 and the hybrid battery 8 are high, reduction of the HVS at activation of the brake override system is performed by both reducing the engine torque and controlling the torque of the motor 3, and the amount of reduction of the HVS output by the torque control of the motor 3 is reduced. Therefore, the loads on the motor 3 and the hybrid battery 8 are suppressed.

In the present embodiment, only when the sport traveling mode, which increases acceleration performance of the hybrid vehicle to be higher than usual, is selected, reducing the HVS output at activation of the brake override system is performed only by controlling the control of the motor 3. Therefore, the re-acceleration performance after the brake override system is deactivated is made higher only when it is demanded by the driver, so that the drivability is more efficiently prevented from deteriorating. Further, a reduction of the HVS output only by torque control of the motor 3 that leads to increases in load on the motor 3 and the hybrid battery 8 can be limited to only when it is actually demanded, so that these loads are suppressed.

The above described embodiments may be modified as follows.

In the above-described embodiment, the acceleration performance of the vehicle in the sport traveling mode is improved by increasing the requested output at the same accelerator operation amount. However, the acceleration performance in the sport traveling mode may be improved by other methods. For example, the acceleration performance of the vehicle can also be made higher than usual by changing the shift map to reduce the change gear ratio between the engine 1 and the drive wheels 6 at the same vehicle speed according to setting of the sport traveling mode.

In a vehicle using a traction control system, when occurrence of wheel spin is detected from the vehicle speed and the rotation speeds of the wheels, wheel spin is eliminated by reducing the drive force to be transmitted to the drive wheels by reducing the output of the drive source (engine or the like). In a vehicle having such a traction control system, even when a driver strongly steps on the accelerator pedal 10a, the traction control system is activated and the output does not rise in some cases. Therefore, when a driver needs high acceleration performance, a traction control system deactivation switch may be installed so that the traction control system can be deactivated. In this vehicle, when reduction of the output according to activation of the traction control system does not occur, the acceleration performance of the vehicle accordingly becomes higher, so that the acceleration performance of the vehicle is increased to be higher than usual by deactivating the traction control system. Therefore, such deactivation of the traction control system also corresponds to selecting of a traveling mode that increases the acceleration performance of the hybrid vehicle to be higher than usual in the present invention.

Whether or not the loads on the motor 3 and the hybrid battery 8 are high is determined from the temperature of the motor 3 and the temperature, voltage, and SOC value of the hybrid battery 8, however, this determination may be performed by using other parameters.

In one embodiment, loads on the motor 3 and the hybrid battery 8 are high, the HVS output is reduced by reducing the engine torque and torque control of the motor 3. Otherwise, the HVS output is reduced only by controlling the torque of the motor 3. As a matter of course, by reducing the amount of reduction of the HVS output by controlling the torque of the motor 3, loads on the motor 3 and the hybrid battery 8 can be suppressed.

In the fifth embodiment, the amount the HVS output reduction by torque control of the motor 3 at the time of activation of the brake override system is increased only when both of the following conditions (a) and (b) are satisfied, however, the amount of reduction may be increased when either one of the conditions is satisfied.
(a) The loads on the motor 3 and the hybrid battery 8 are not high.
(b) A traveling mode that increases the acceleration performance of the vehicle to be higher than usual is set.

The processing to reduce the HVS output by torque control of the motor 3 while maintaining the engine torque of Step S101 in the brake override control routine according to the first embodiment may be performed if either or both of (a) and (b) given above are satisfied. In other cases, by reducing HVS output by reducing the engine torque and by controlling the torque of the motor 3, the loads on the motor 3 and the hybrid battery 8 are suppressed and the drivability is more efficiently prevented from deteriorating.

The processing to increase the engine torque of Step S201 in the brake override control routine and the processing to reduce the HVS output by torque control of the motor 3 of Step S202 in the second embodiment may be performed on condition that either or both of (a) and (b) given above are satisfied, in other cases, by reducing the HVS output by reducing the engine torque and by controlling the torque of the motor 3, the loads on the motor 3 and the hybrid battery 8 can be suppressed and the drivability is more efficiently prevented from deteriorating.

The processing to start the engine 1 of Step S302 and the processing to reduce the HVS output by torque control of the motor 3 of Step S303 in the brake override control routine in the third embodiment may be performed on condition that either or both of (a) and (b) given above are satisfied. In other cases, by reducing the HVS output by reducing the engine torque and by controlling the torque of the motor 3, the loads on the motor 3 and the hybrid battery 8 can be suppressed and the drivability is more efficiently prevented from deteriorating.

In the brake override control routine in the fourth embodiment, on condition that the elapsed time after the start of activation of the brake override system is less than the threshold α, the HVS output is reduced only by torque control of the motor 3. As a condition for reducing the HVS output only by controlling the torque of the motor 3, either or both of (a) and (b) given above may be added.

In the fourth embodiment, when the elapsed time after the start of activation of the brake override system becomes equal to or more than the threshold a, the amount of reduction of the HVS output by torque control of the motor 3 is reduced. However, the threshold α may be variable according to the loads on the motor 3 and the hybrid battery 8. Specifically, when these loads are high, a smaller value is set as the threshold α so that the loads are reduced in a shorter time, and accordingly, the loads on the motor 3 and the hybrid battery 8 can be suppressed.

In the fourth embodiment, the amount of reduction of the HVS output by torque control of the motor 3 is reduced only once when the elapsed time after the start of activation of the brake override system reaches the threshold a. However, the amount of reduction of the HVS output by torque control of the motor 3 may be gradually reduced or reduced in a stepwise manner with the elapsed time.

In each embodiment described above, by reducing the HVS output by reducing only the motor torque without reducing the engine torque, the re-acceleration performance of the hybrid vehicle after the brake override system is deactivated is prevented from deteriorating. As a matter of course, even if the engine torque is reduced, as long as the amount of reduction is small, deterioration of the re-acceleration performance is limited. Therefore, at the time of the reduction of the HVS output according to activation of the brake override system, re-acceleration performance is prevented from deteriorating by increasing the ratio of the amount of reduction of the HVS output by torque control of the motor 3 to the total amount of reduction of the HVS output to be higher than in the case where similar reduction of the HVS output is performed according to reduction in accelerator operation amount.

### Description of the Reference Numerals

1...engine, 2...generator, 3...motor, 4... power split mechanism, 5...speed reduction mechanism, 6...drive wheel, 7.. power control unit, 8...hybrid battery, 9...electronic control unit, 10...accelerator position sensor, 10a...accelerator pedal, 11...master cylinder pressure sensor, 11a...brake pedal, 12...vehicle speed sensor, 13...battery temperature sensor, 14...battery voltage sensor, 15...battery current sensor, 16...motor temperature sensor, 17...traveling mode changeover switch

## Claims

1. A hybrid vehicle control device (9) that is applied to a hybrid vehicle including, as a drive source, a hybrid system having an engine (1) and a motor (3),
the control device (9) being configured to calculate a requested value of an output to be transferred to drive wheels (6) from the hybrid system based on an accelerator operation amount, a vehicle speed and a state of charge of a battery (8),
wherein the control device (9) is configured to perform the torque control of the motor (3) and the engine (1) according to the requested value,
wherein the control device (9) reduces the output to be transmitted to the drive wheels (6) from the hybrid system lower than the requested value when an accelerator operation and a brake operation are simultaneously performed by a driver,
wherein, at the time of reducing the output to be transferred to the drive wheels (6) from the hybrid system by a first amount when an accelerator operation and a brake operation are simultaneously performed, the control device (9) is configured to make a ratio of an amount of reduction of the output to be transferred to the drive wheels (6) from the hybrid system by torque control of the motor (3) to the total amount of reduction of the output to be transferred to the drive wheels (6) from the hybrid system larger than that in the case where reduction of the output to be transferred to the drive wheels (6) from the hybrid system by the first amount is performed due to reduction of the requested value according to a reduction in the accelerator operation amount,
wherein a brake override system that makes braking of the vehicle based on the brake operation override acceleration of the vehicle based on an accelerator operation is applied to the vehicle,
wherein the reduction of the output to be transferred to the drive wheels (6) from the hybrid system is exclusively obtained by reduction of motor torque without reducing engine torque,
**characterized in that**, when an accelerator operation and a brake operation are simultaneously performed by a driver, the control device (9) is configured to reduce the output to be transmitted to the drive wheels (6) from the hybrid system lower than the requested value by torque control of the motor (3) while engine torque is maintained.

2. The hybrid vehicle control device (9) according to claim 1, wherein, after a prescribed time elapses from the start of simultaneous performance of the accelerator operation and the brake operation, the amount of reduction of the output by torque control of the motor (3) decreases, and the amount of reduction of the output by reducing the engine torque increases.

3. The hybrid vehicle control device (9) according to any one of claims 1 and 2, wherein, when electrical load demands on the motor (3) and the battery (8) that supplies electricity to the motor (3) are high, the amount of reduction of the output by torque control of the motor (3) is smaller than in the case where the electrical load demands are not high.

4. The hybrid vehicle control device (9) according to any one of claims 1 to 3, wherein, when a traveling mode in which acceleration performance of the hybrid vehicle is made higher than usual is not selected, the amount of reduction of the output by torque control of the motor (3) is smaller than in the case where the traveling mode is selected.

## Patentansprüche

1. Steuerungsvorrichtung (9) für ein Hybridfahrzeug, die auf ein Hybridfahrzeug angewendet wird, das als eine Antriebsquelle ein Hybridsystem mit einem Verbrennungsmotor (1) und einem Motor (3) enthält,
wobei die Steuerungsvorrichtung (9) konfiguriert ist, um einen angeforderten Wert einer Ausgabe, die von dem Hybridsystem an Antriebsräder (6) übertragen werden soll, basierend auf einer Gaspedalbetätigungsgröße, einer Fahrzeuggeschwindigkeit und einem Ladezustand einer Batterie (8) zu berechnen,
wobei die Steuerungsvorrichtung (9) konfiguriert ist, um die Drehmomentsteuerung des Motors (3) und des Verbrennungsmotors (1) gemäß dem angeforderten Wert durchzuführen,
wobei die Steuerungsvorrichtung (9) die Ausgabe, die von dem Hybridsystem an die Antriebsräder (6) übertragen werden soll, reduziert, um niedriger als der angeforderte Wert zu sein, wenn eine Gaspedalbetätigung und eine Bremsbetätigung durch einen Fahrer gleichzeitig durchgeführt werden,
wobei zu der Zeit eines Reduzierens der Ausgabe, die von dem Hybridsystem an die Antriebsräder (6) übertragen werden soll, um eine erste Größe, wenn eine Gaspedalbetätigung und eine Bremsbetätigung gleichzeitig durchgeführt werden, die Steuerungsvorrichtung (9) konfiguriert ist, um ein Verhältnis aus einer Größe einer Reduzierung der Ausgabe, die von dem Hybridsystem an die Antriebsräder (6) übertragen werden soll, durch die Drehmomentsteuerung des Motors (3) zu der Gesamtgröße einer Reduzierung der Ausgabe, die von dem Hybridsystem an die Antriebsräder (6) übertragen werden soll, größer als jenes in dem Fall zu machen, in dem eine Reduzierung der Ausgabe, die von dem Hybridsystem an die Antriebsräder (6) übertragen werden soll, um die erste Größe aufgrund einer Reduzierung des angeforderten Werts gemäß einer Reduzierung in der Gaspedalbetätigungsgröße durchzuführen,
wobei ein Bremsaufhebungssystem, das das Fahrzeug basierend auf der Bremsbetätigungsaufhebung-Beschleunigung des Fahrzeugs bremsen lässt, die auf einer Gaspedalbetätigung basiert, auf das Fahrzeug angewendet wird,
wobei die Reduzierung der Ausgabe, die von dem Hybridsystem an die Antriebsräder (6) übertragen werden soll, ausschließlich durch eine Reduzierung eines Motordrehmoments erhalten wird, ohne das Verbrennungsmotordrehmoment zu reduzieren,
**dadurch gekennzeichnet, dass**, wenn eine Gaspedalbetätigung und eine Bremsbetätigung durch einen Fahrer gleichzeitig durchgeführt werden, die Steuerungsvorrichtung (9) konfiguriert ist, um die Ausgabe, die von dem Hybridsystem an die Antriebsräder (6) übertragen werden soll, durch die Drehmomentsteuerung des Motors (3) zu reduzieren, um niedriger als der angeforderte Wert zu sein, während das Verbrennungsmotordrehmoment beibehalten wird.

2. Steuerungsvorrichtung (9) für ein Hybridfahrzeug gemäß Anspruch 1, wobei, nachdem eine vorbestimmte Zeit ab dem Start einer gleichzeitigen Durchführung der Gaspedalbetätigung und der Bremsbetätigung verstreicht, sich die Größe einer Reduzierung der Ausgabe durch die Drehmomentsteuerung des Motors (3) verringert und sich die Größe einer Reduzierung der Ausgabe durch ein Reduzieren des Verbrennungsmotordrehmoments erhöht.

3. Steuerungsvorrichtung (9) für ein Hybridfahrzeug gemäß einem der Ansprüche 1 und 2, wobei, wenn elektrische Lastanforderungen an den Motor (3) und die Batterie (8), die den Motor (3) mit Elektrizität versorgt, hoch sind, die Größe einer Reduzierung der Ausgabe durch die Drehmomentsteuerung des Motors (3) kleiner als in dem Fall ist, in dem die elektrischen Lastanforderungen nicht hoch sind.

4. Steuerungsvorrichtung (9) für ein Hybridfahrzeug gemäß einem der Ansprüche 1 bis 3, wobei, wenn ein Fortbewegungsmodus, in dem eine Beschleunigungsleistungsfähigkeit des Hybridfahrzeugs höher als üblich gemacht wird, nicht gewählt ist, die Größe einer Reduzierung der Ausgabe durch die Drehmomentsteuerung des Motors (3) kleiner als in dem Fall ist, in dem der Fortbewegungsmodus gewählt ist.

## Revendications

1. Dispositif de commande de véhicule hybride (9) qui est appliqué à un véhicule hybride comprenant, comme source d'entraînement, un système hybride ayant un moteur thermique (1) et un moteur électrique (3),
le dispositif de commande (9) étant configuré pour calculer une valeur demandée d'une sortie devant être transférée à des roues motrices (6) à partir du système hybride sur la base d'une quantité d'actionnement d'accélérateur, d'une vitesse de véhicule et d'un état de charge d'une batterie (8),
le dispositif de commande (9) étant configuré pour réaliser la commande de couple du moteur électrique (3) et du moteur thermique (1) en fonction de la valeur demandée,
le dispositif de commande (9) réduisant la sortie devant être transmise aux roues motrices (6) depuis le système hybride en dessous de la valeur demandée quand un actionnement d'accélérateur et un actionnement de frein sont simultanément réalisés par un conducteur,
le dispositif de commande (9) étant configuré pour, au moment de la réduction de la sortie devant être transférée aux roues motrices (6) depuis le système hybride d'une première quantité quand un actionnement d'accélérateur et un actionnement de frein sont simultanément réalisés, rendre un rapport d'une quantité de réduction de la sortie devant être transférée aux roues motrices (6) à partir du système hybride par une commande de couple du moteur électrique (3) sur la quantité totale de réduction de la sortie devant être transférée aux roues motrices (6) à partir du système hybride plus grand que celui dans le cas où une réduction de la sortie devant être transférée aux roues motrices (6) à partir du système hybride de la première quantité est réalisée du fait d'une réduction de la valeur demandée en fonction d'une réduction de la quantité d'actionnement d'accélérateur,
un système de priorité de frein qui amène un freinage du véhicule sur la base de l'actionnement de frein à avoir priorité sur une accélération du véhicule sur la base d'un actionnement d'accélérateur étant appliqué au véhicule,
la réduction de la sortie devant être transférée aux roues motrices (6) à partir du système hybride étant exclusivement obtenue par une réduction de couple de moteur électrique sans réduire le couple de moteur thermique,
**caractérisé en ce que**, quand un actionnement d'accélérateur et un actionnement de frein sont simultanément réalisés par un conducteur, le dispositif de commande (9) est configuré pour réduire la sortie devant être transmise aux roues motrices (6) à partir du système hybride en dessous de la valeur demandée par une commande de couple du moteur électrique (3) alors que le couple de moteur thermique est maintenu.

2. Dispositif de commande de véhicule hybride (9) selon la revendication 1, dans lequel, après qu'un temps prescrit s'écoule depuis le début de réalisation simultanée de l'actionnement d'accélérateur et de l'actionnement de frein, la quantité de réduction de la sortie par une commande de couple du moteur électrique (3) diminue, et la quantité de réduction de la sortie en réduisant le couple de moteur thermique augmente.

3. Dispositif de commande de véhicule hybride (9) selon l'une quelconque des revendications 1 et 2, dans lequel, quand des demandes de charge électrique du moteur électrique (3) et de la batterie (8) qui délivre de l'électricité au moteur électrique (3) sont élevées, la quantité de réduction de la sortie par une commande de couple du moteur électrique (3) est plus petite que dans le cas où les demandes de charge électrique ne sont pas élevées.

4. Dispositif de commande de véhicule hybride (9) selon l'une quelconque des revendications 1 à 3, dans lequel, quand un mode de déplacement dans lequel une performance d'accélération du véhicule hybride est rendue plus élevée qu'habituellement n'est pas sélectionnée, la quantité de réduction de la sortie par une commande de couple du moteur électrique (3) est plus petite que dans le cas où le mode de déplacement est sélectionné.
